# FASCICULE DE BREVET EUROPEEN

(11) **EP 1 586 496 B1**
(45) Date de publication et mention de la délivrance du brevet: **04.03.2009**
(21) Numéro de dépôt: 05290550.2
(22) Date de dépôt: 11.03.2005
(51) Int. Cl.: B62D 25/06

(54) **Toit de véhicule automobile et véhicule automobile comportant un tel toit**
Kraftfahrzeugdach und damit ausgestattetes Kraftfahrzeug
Vehicle roof and vehicle having such a roof

(30) Priorité: 14.04.2004 FR 0403895
(43) Date de publication de la demande: 19.10.2005
(73) Titulaire: Peugeot Citroën Automobiles S.A., 78140 Vélizy Villacoublay (FR)
(72) Inventeur: Kauffmann, Michel, 25460 Etupes (FR); Patois, Christophe, 25310 Thulay (FR)

(56) Documents cités:
- EP-A- 1 422 126
- EP-A- 1 440 869
- DE-A- 10 155 773
- DE-A- 10 252 912

## Description

La présente invention concerne un toit de véhicule automobile, ainsi qu'un véhicule automobile équipé d'un tel toit.

Les caisses des véhicules automobiles sont formées à partir de divers éléments métalliques assemblés entre eux par soudage ou par rivetage et qui comprennent notamment un toit et, sur chaque flanc, un arc de pavillon fixé sur chacun des bords longitudinaux du pavillon, un longeron et un montant central reliant cet arc de pavillon à ce longeron, ces éléments constituant avec d'autres éléments du véhicule, la superstructure de ce véhicule.

Le plus souvent, ces différents éléments sont réalisés à partir de tôles en acier.

Or, la tendance des constructeurs de véhicules automobiles est de réduire le poids des véhicules pour diminuer la consommation, tout en conservant, voire en améliorant, la résistance aux chocs de ceux-ci.

Une des solutions envisagées consiste à réaliser des tôles de plus en plus minces ou des tôles à haute limite élastique, ce qui pose des problèmes connexes d'emboutissage et de résistance mécanique.

Une autre solution consiste à employer pour certains éléments de la caisse, des éléments réalisés à partir d'aluminium ou d'alliage d'aluminium dont le poids spécifique équivaut à un tiers de celui de l'acier. C'est le cas par exemple pour le toit des véhicules automobiles.

De préférence, le toit en aluminium ou en alliage d'aluminium est associé avec des éléments en acier de la superstructure qui est un matériau permettant de mieux répondre aux contraintes de style que l'aluminium.

Mais, l'utilisation d'un tel matériau pour le toit avec des éléments de la superstructure en acier pose des problèmes.

En effet, lors du passage de la caisse en cataphorèse ou en étuve, il peut se produire une déformation géométrique du toit, compte tenu des dilatations différentielles entre l'aluminium et l'acier.

Un toit de véhicule automobile conforme au préambule de la revendication 1 est connu du document DE 10155773 A.

L'invention a pour but de proposer un toit de véhicule automobile qui évite les inconvénients précédemment mentionnés et qui permet d'obtenir un gain de poids au niveau de la caisse du véhicule automobile.

L'invention a donc pour objet un toit de véhicule automobile tel que décrit par la revendication 1.

Selon d'autres caractéristiques de l'invention :
- le cadre support comporte une partie périphérique formée par des profilés déterminant un contour correspondant sensiblement au contour du panneau extérieur et de forme rectangulaire,
- le cadre support comporte des profilés intermédiaires transversaux reliant entre eux les profilés de la partie périphérique,
- les profilés de la partie périphérique du cadre support présentent chacun une section en forme de "U" comportant un fond et une branche latérale disposée du côté intérieur du véhicule et une branche latérale disposée du côté extérieur de ce véhicule, chaque branche étant prolongée par une feuillure s'étendant sensiblement perpendiculairement à la branche correspondante vers l'extérieur du profilé,
- pour chaque profilé de la partie périphérique du cadre support, la feuillure de la branche latérale intérieure forme une surface d'appui du panneau extérieur et la feuillure de la branche latérale extérieure forme une surface pour la liaison mécanique avec le bord du cadre support,
- la liaison mécanique est une liaison par soudage et/ou par rivetage et/ou par déformation,
- la liaison mécanique est réalisée par pliage du bord périphérique du panneau extérieur sur la feuillure de la branche latérale extérieure du profilé,
- la branche latérale intérieure comporte une indentation de positionnement du cordon de colle et la branche latérale extérieure comporte une indentation de positionnement d'un cordon d'étanchéité,
- les profilés intermédiaires présentent chacun une section en forme de "U" comportant un fond et deux branches latérales prolongées chacune par une feuillure s'étendant sensiblement perpendiculairement à la branche correspondante, vers l'extérieur du profilé, et formant une surface d'appui du panneau extérieur,
- chaque branche latérale comporte une indentation de positionnement d'un cordon de colle.

L'invention a également pour objet un véhicule automobile, caractérisé en ce qu'il comporte un toit tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une caisse d'un véhicule automobile équipée d'un toit conforme à l'invention,
- la Fig. 2 est une vue schématique en perspective des éléments composant le toit conforme à l'invention,
- la Fig. 3 est une vue de dessous du toit conforme à l'invention,
- la Fig. 4 est une vue schématique en coupe selon la ligne 4-4 de la Fig. 3,
- la Fig. 5 est une vue schématique en coupe selon la ligne 5-5 de la Fig. 3,
- la Fig. 6 est une vue en coupe selon la ligne 6-6 de la Fig. 3, et
- la Fig. 7 est une vue en coupe selon la ligne 7-7 de la Fig. 3.

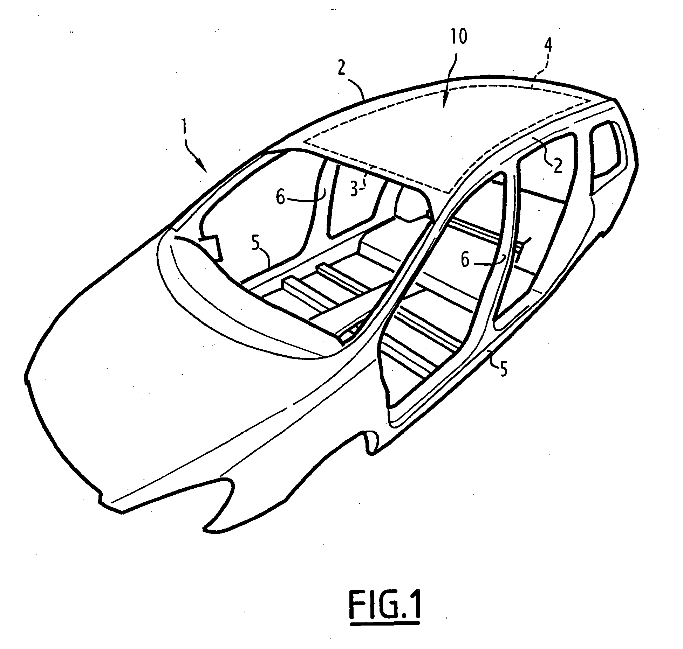

Sur la Fig. 1, on a représenté schématiquement une caisse d'un véhicule automobile, désignée dans son ensemble par la référence 1, et qui comprend notamment un pavillon désigné par la référence générale 10 et une superstructure comprenant deux arcs de pavillon 2, une traverse avant 3, une traverse arrière 4, deux longerons 5 et deux montants centraux 6 reliant chacun un arc de pavillon 2 et un longeron 5.

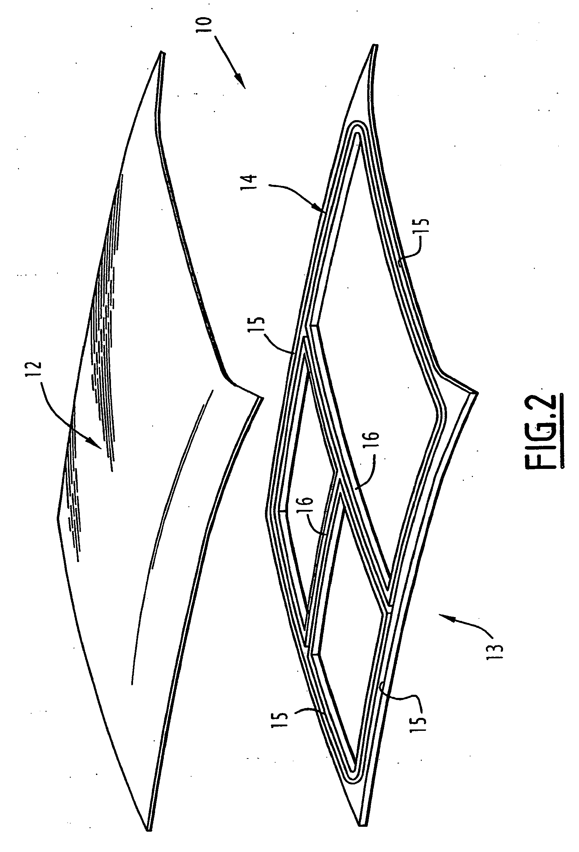

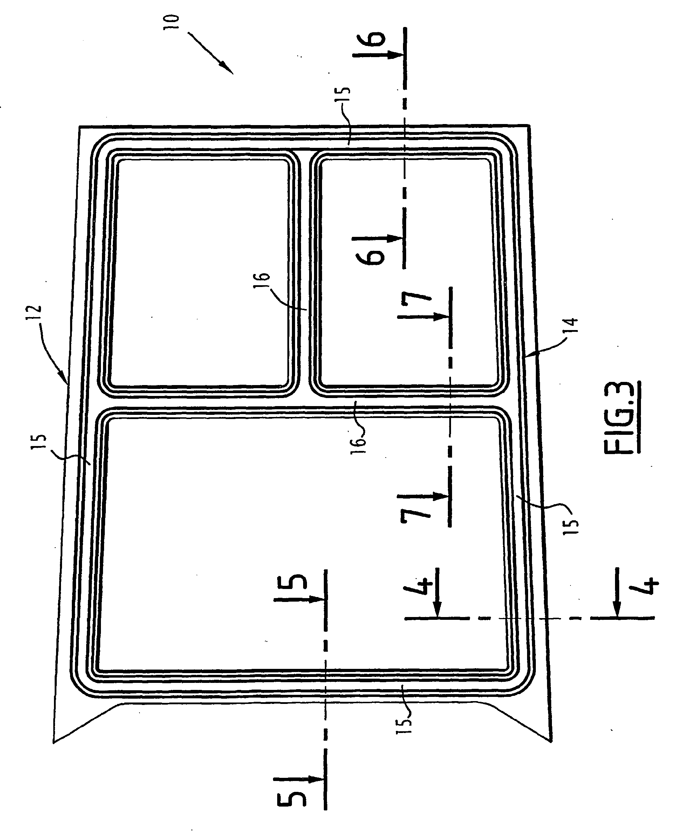

Ainsi que montré sur les Figs. 2 et 3, le pavillon 10 se compose de deux éléments, un premier élément constitué par un panneau extérieur 12 en aluminium ou en alliage d'aluminium ayant une forme générale sensiblement rectangulaire, et un second élément constitué par un cade support 13 également en aluminium ou en alliage d'aluminium.

Dans l'exemple de réalisation représenté sur les Figs. 2 et 3, le cadre support 13 comporte une partie périphérique 14 formée par des profilés 15 déterminant un contour correspondant sensiblement au contour du panneau extérieur 12, c'est à dire de forme sensiblement rectangulaire.

Le cadre support 13 comporte aussi des profilés intermédiaires 16 transversaux reliant entre eux les profilés 15 de la partie périphérique 14 ou reliant entre eux les profilés intermédiaires.

Toute autre configuration à celle représentée sur la Fig. 2 peut être envisagée.

D'une manière générale, le panneau extérieur 12 et le cadre support 13 sont reliés, d'une part, l'un à l'autre par au moins un cordon de colle et par une liaison mécanique s'étendant au moins sur le pourtour de ce panneau 12 et de ce cadre 13 et, d'autre part, à la superstructure de la caisse du véhicule automobile par un cordon de colle interposé entre le cadre support 13 et cette superstructure et s'étendant sur toute la périphérie dudit cadre 13.

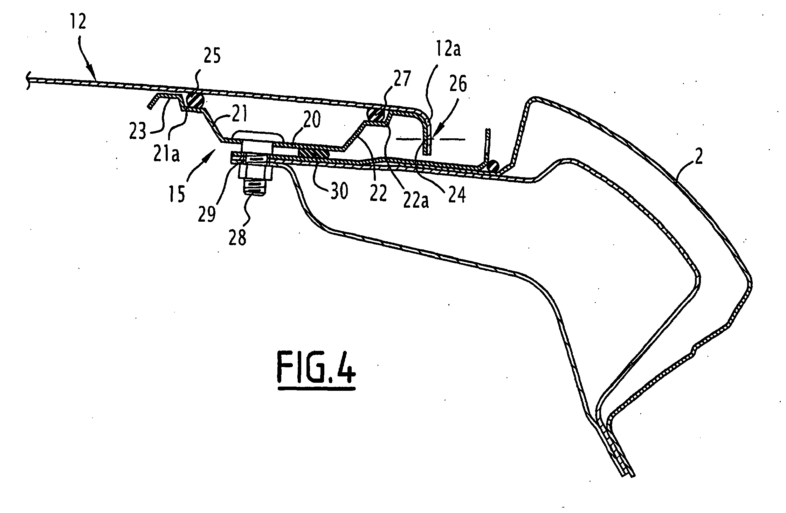

Pour cela, comme montré sur les Figs. 4 à 6, les profilés 15 de la partie périphériques 14 du cadre support 13 présentent chacun une section en forme de "U" comportant un fond 20 et une branche latérale 21 disposée du côté intérieur du véhicule et une branche latérale 22 disposée du côté extérieur de ce véhicule. La branche intérieure 21 est prolongée par une feuillure 23 s'étendant sensiblement perpendiculairement à cette branche et vers l'extérieur du profilé 15 et la branche extérieure 22 est également prolongée par une feuillure 24 s'étendant sensiblement perpendiculairement à la branche 22 et vers l'extérieur du profilé 15.

Par ailleurs, la branche intérieure 21 comporte une indentation 21 a et la branche extérieure 22 comporte une indentation 22a.

Ainsi que montré sur les Figs. 4 à 6, la liaison entre le panneau extérieur 12 et chaque profilé 15 de la partie périphérique 14 du cadre 13 est réalisée par un cordon de colle 25 disposé dans l'indentation 21 a de la branche intérieure 21 et sur lequel vient s'appliquer ce panneau extérieur 12. La feuillure 23 de la branche intérieure 21 forme également une surface d'appui dudit panneau extérieur 12.

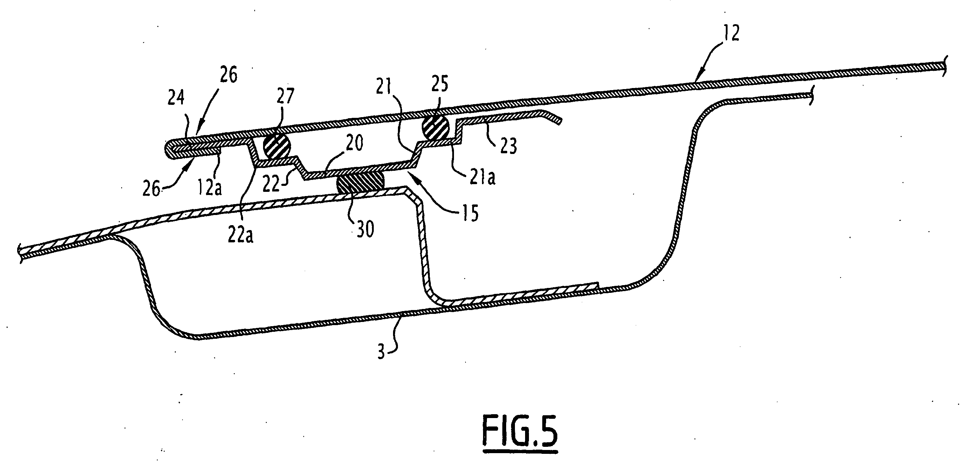

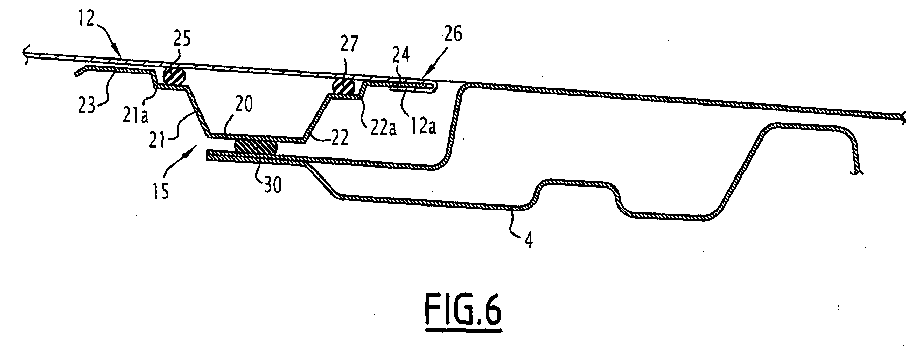

Cette liaison est complétée par la liaison mécanique 26 entre la feuillure 24 de la branche extérieure 22 et le bord 12a du cadre support 12. La liaison mécanique 26 entre le panneau extérieur 12 et chaque profilé 15 peut être une liaison par soudage, par rivetage ou par déformation également appelée clinchage ou par combinaison de ces différents modes de liaison. La liaison mécanique 26 peut également être réalisée par pliage du bord périphérique 12a du panneau extérieur 12 sur la feuillure 22a de la branche latérale extérieure 22 du profilé 15, ainsi que montré sur les Figs. 5 et 6. Tout autre mode d'assemblage pour réaliser la liaison mécanique 26 peut être envisagé.

Enfin, un cordon 27 formant joint d'étanchéité est disposé dans l'indentation 22a de la branche extérieure 22 et sur lequel vient en appui le panneau extérieur 12. La liaison entre chaque arc de pavillon 2 de la structure et le profilé 15 du cadre support 13 est réalisée par un cordon de colle 30 interposé entre le fond 20 du profilé 15 et l'arc de pavillon 2 correspondant.

Au niveau de ces arcs de pavillon 2, le cadre support 13 est de préférence équipé d'éléments d'indexage 28 constitués par exemple par des pions ou des vis destinés à être positionnés dans des orifices 29 ménagés sur le bord intérieur de chaque arc de pavillon 2, ainsi que montré à la Fig. 4.

La liaison entre l'ensemble formé par le panneau extérieur 12 et le cadre support 13 au niveau de la traverse avant 3 est aussi réalisée par un cordon de colle 30 (Fig. 5) interposé entre le fond du profilé 15 et cette traverse 3.

Enfin, la liaison entre l'ensemble formé par le panneau extérieur 12 et le cadre support 13 au niveau de la traverse arrière 4 est également obtenue par un cordon de colle 30 (Fig. 6) interposé entre le fond 20 du profilé 15 et cette traverse 4. Ainsi, le cordon 30 s'étend sur tout le pourtour du cadre support 13.

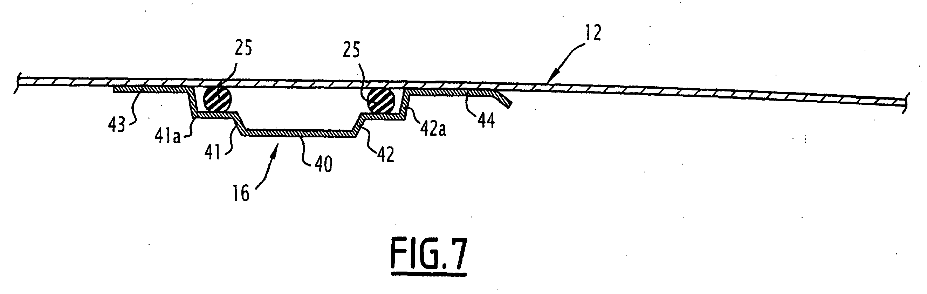

Comme montré à la Fig. 7 chaque profilé intermédiaire 16 présente également une section en forme de "U" comportant un fond 40 et deux branches latérales, respectivement 41 et 42, prolongées chacune par une feuillure, respectivement 43 et 44, s'étendant sensiblement perpendiculairement à la branche correspondante vers l'extérieur du profilé 16 et formant une surface d'appui pour le panneau extérieur 12. Chaque branche, respectivement 41 et 42, comporte une indentation, respectivement 41a et 42a, de positionnement dans chacune de celle-ci d'un cordon de colle 25 qui assure la liaison entre le profilé intermédiaire 16 et le panneau extérieur 12.

Ainsi, le cadre support 13 formé par les profilés 15 et 16 a donc deux fonctions, une fonction de liaison entre ces profilés et le panneau extérieur 12 et de rigidification de ce panneau extérieur 12, et une fonction de liaison entre l'ensemble constitué par le cadre support 13 et le panneau extérieur 12 avec la superstructure de la caisse 1 du véhicule automobile.

Le toit selon l'invention permet d'avoir, dans les zones de liaison entre ce toit en aluminium ou en alliage d'aluminium et la superstructure en acier du véhicule automobile, une liaison souple entre ces éléments grâce au cordon de colle ce qui facilite les techniques d'assemblage et diminue les risques de déformation dans ces zones et également au niveau du pavillon, notamment au passage de la caisse en cataphorèse et en étuve.

Par ailleurs, le toit selon l'invention permet de pouvoir monter facilement sur les véhicules automobiles, un toit complètement en tôle ou un toit avec un ouvrant ou un toit en verre offrant ainsi la possibilité de transformer facilement un véhicule automobile.

Le toit selon l'invention offre également la possibilité d'être réparé facilement en service après vente après la coupe du cordon de colle sans réalisation de soudure dans les zones d'assemblage. Il offre également la possibilité de pouvoir monter des toits de peintures différentes sur la caisse du véhicule automobile.

Enfin, le toit selon l'invention permet d'obtenir un gain de poids de la caisse du véhicule automobile.

## Revendications

1. Toit de véhicule automobile comportant notamment une superstructure en acier, qui est formé par un panneau extérieur (12) en aluminium ou en alliage d'aluminium et un cadre support (13) reliés, d'une part, l'un à l'autre par au moins un cordon de colle (25) s'étendant au moins sur le pourtour dudit panneau (12) et dudit cadre (13) et, d'autre part, à la superstructure par un cordon de colle (30) interposé entre ledit cadre support (13) et cette superstructure et s'étendant sur toute la périphérie dudit cadre (13), **caractérisé en ce que** le cadre support (13) est également en aluminium ou en alliage d'aluminium et **en ce que** le panneau extérieur (12) et le cadre support (13) sont reliés par une liaison mécanique (26) s'étendant au moins sur le pourtour dudit panneau (12) et dudit cadre (13).

2. Toit de véhicule automobile selon la revendication 1, **caractérisé en ce que** le cadre support (13) comporte une partie périphérique (14) formée par des profilés (15) déterminant un contour correspondant sensiblement au contour du panneau extérieur (12) et de forme rectangulaire.

3. Toit de véhicule automobile selon la revendication 1 ou 2, **caractérisé en ce que** le cadre support (13) comporte des profilés intermédiaires (16) transversaux reliant entre eux les profilés (15) de la partie périphérique (14).

4. Toit de véhicule automobile selon la revendication 2, **caractérisé en ce que** les profilés (15) de la partie périphérique (14) du cadre support (13) présentent chacun une section en forme de "U" comportant un fond (20) et une branche latérale (21) disposée du côté intérieur du véhicule et une branche latérale (22) disposée du côté extérieur de ce véhicule, chaque branche (21, 22) étant prolongée par une feuillure (23, 24) s'étendant sensiblement perpendiculairement à la branche correspondante, vers l'extérieur du profilé (15).

5. Toit de véhicule automobile selon la revendication 4, **caractérisé en ce que** pour chaque profilé (15) de la partie périphérique (14) du cadre support (13), la feuillure (23) de la branche latérale (21) intérieure forme une surface d'appui du panneau extérieur (12) et la feuillure (24) de la branche latérale (22) extérieure forme une surface pour la liaison mécanique (26) avec le bord (12a) du cadre support (12).

6. Toit de véhicule automobile selon l'une quelconque des revendications 1 à 5, **caractérisé en ce que** la liaison mécanique (26) est une liaison par soudage et/ou par rivetage et/ou par déformation.

7. Toit de véhicule automobile selon l'une quelconque des revendications 1 à 5, **caractérisé en ce que** la liaison mécanique (26) est réalisée par pliage du bord périphérique (12a) du panneau extérieur (12) sur la feuillure (24) de la branche latérale (22) extérieure du profilé (15).

8. Toit de véhicule automobile selon la revendication 4 ou 5, **caractérisé en ce que** la branche latérale (21) intérieure comporte une indentation (21 a) de positionnement du cordon de colle (25) et la branche latérale (22) extérieure comporte une indentation (22a) de positionnement d'un cordon d'étanchéité (27).

9. Toit de véhicule automobile selon la revendication 3, **caractérisé en ce que** les profilés intermédiaires (16) présentent chacun une section en forme de "U" comportant un fond (40) et une branche latérale (41, 42) prolongée chacune par une feuillure (43, 44) s'étendant sensiblement perpendiculairement à la branche correspondante, vers l'extérieur du profilé (16), et formant une surface d'appui du panneau extérieur (12).

10. Toit de véhicule automobile selon la revendication 9, **caractérisé en ce que** chaque branche latérale (41, 42) comporte une indentation (41 a, 42a) de positionnement d'un cordon de colle (25).

11. Toit de véhicule automobile selon l'une quelconque des revendications 1 à 10, **caractérisé en ce que** le cadre support (13) comporte des éléments d'indexage (28) sur la superstructure du véhicule automobile.

12. Véhicule automobile, **caractérisé en ce qu'**il comporte un toit (10) selon l'une quelconque des revendications précédentes.

## Claims

1. Motor vehicle roof comprising notably a superstructure made of steel, which is formed by an outer panel (12) made of aluminium or of aluminium alloy and a supporting frame (13) connected, on the one hand, to one another by at least one bead of adhesive (25) extending at least over the periphery of the said panel (12) and of the said frame (13) and, on the other hand, to the superstructure by a bead of adhesive (30) interposed between the said supporting frame (13) and this superstructure and extending over the whole periphery of the said frame (13), **characterized in that** the supporting frame (13) is also made of aluminium or aluminium alloy and **in that** the outer panel (12) and the supporting frame (13) are connected via a mechanical connection (26) extending at least over the periphery of the said panel (12) and of the said frame (13).

2. Motor vehicle roof according to Claim 1, **characterized in that** the supporting frame (13) comprises a peripheral portion (14) formed by section pieces (15) determining a contour corresponding substantially to the contour of the outer panel (12) and of rectangular shape.

3. Motor vehicle roof according to Claim 1 or 2, **characterized in that** the supporting frame (13) comprises transverse intermediate section pieces (16) connecting together the section pieces (15) of the peripheral portion (14).

4. Motor vehicle roof according to Claim 2, **characterized in that** the section pieces (15) of the peripheral portion (14) of the supporting frame (13) each have a U-shaped section comprising a web (20) and one lateral flange (21) placed on the inside of the vehicle and one lateral flange (22) placed on the outside of this vehicle, each flange (21, 22) being extended by a rebate (23, 24) extending substantially perpendicularly to the corresponding flange, towards the outside of the section piece (15).

5. Motor vehicle roof according to Claim 4, **characterized in that**, for each section piece (15) of the peripheral portion (14) of the supporting frame (13), the rebate (23) of the inner lateral flange (21) forms a bearing surface of the outer panel (12) and the rebate (24) of the outer lateral flange (22) forms a surface for the mechanical connection (26) with the edge (12a) of the supporting frame (12).

6. Motor vehicle roof according to any one of Claims 1 to 5, **characterized in that** the mechanical connection (26) is a connection by welding and/or by riveting and/or by deformation.

7. Motor vehicle roof according to any one of Claims 1 to 5, **characterized in that** the mechanical connection (26) is made by folding the peripheral edge (12a) of the outer panel (12) onto the rebate (24) of the outer lateral flange (22) of the section piece (15).

8. Motor vehicle roof according to Claim 4 or 5, **characterized in that** the inner lateral flange (21) comprises a positioning indentation (21a) for the bead of adhesive (25) and the outer lateral flange (22) comprises a positioning indentation (22a) for a sealing bead (27).

9. Motor vehicle roof according to Claim 3, **characterized in that** the intermediate section pieces (16) each have a U-shaped section comprising a web (40) and a lateral flange (41, 42) each extended by a rebate (43, 44) extending substantially perpendicularly to the corresponding flange towards the outside of the section piece (16), and forming a bearing surface of the outer panel (12).

10. Motor vehicle roof according to Claim 9, **characterized in that** each lateral flange (41, 42) comprises a positioning indentation (41a, 42a) for a bead of adhesive (25).

11. Motor vehicle roof according to any one of Claims 1 to 10, **characterized in that** the supporting frame (13) comprises indexing elements (28) on the superstructure of the motor vehicle.

12. Motor vehicle, **characterized in that** it comprises a roof (10) according to any one of the preceding claims.

## Patentansprüche

1. Kraftfahrzeugdach, umfassend insbesondere einen Stahloberbau, der aus einem Außenblech (12) aus Aluminium oder Alulegierung und einem Tragrahmen (13) geformt ist, die einerseits durch mindestens eine Klebstoffschnur (25), die mindestens auf dem Umfang des Blechs (12) und des Rahmens (13) verläuft, miteinander verbunden sind, und andrerseits durch eine Klebstoffschnur (30), die zwischen dem Rahmen (13) und diesem Oberbau liegt und auf dem ganzen Umfang des Rahmens (13) verläuft, mit diesem Oberbau verbunden sind, **dadurch gekennzeichnet, dass** der Tragrahmen (13) ebenfalls aus Aluminium oder Alulegierung besteht und dass das Außenblech (12) und der Tragrahmen (13) durch eine mechanische Verbindung (26) verbunden sind, die mindestens auf dem Umfang des Blechs (12) und des Rahmens (13) verläuft.

2. Kraftfahrzeugdach nach Anspruch 1, **dadurch gekennzeichnet, dass** der Tragrahmen (13) ein Umfangsteil (14) aufweist, das aus Profilen (15) geformt ist, die einen Umriss definieren, der im Wesentlichen dem Umriss des Außenblech (12) entspricht und rechteckig geformt ist.

3. Kraftfahrzeugdach nach Anspruch 1 oder 2, **dadurch gekennzeichnet, dass** der Tragrahmen (13) querliegende Zwischenprofile (16) aufweist, die die Profile (15) des Umfangsteils (14) untereinander verbinden.

4. Kraftfahrzeugdach nach Anspruch 2, **dadurch gekennzeichnet, dass** die Profile (15) des Umfangsteils (14) des Tragrahmens (13) alle einen "U"-förmigen Querschnitt aufweisen, mit einem Boden (20) und einem Seitenzweig (21), der auf der Innenseite des Fahrzeugs angeordnet ist, und einem Seitenzweig (22), der auf der Außenseite dieses Fahrzeugs angeordnet ist, wobei jeder Zweig (21, 22) durch eine Blechkante (23, 24) verlängert wird, die im Wesentlichen rechtwinklig zum entsprechenden Zweig zum Äußeren des Profils (15) hin verläuft.

5. Kraftfahrzeugdach nach Anspruch 4, **dadurch gekennzeichnet, dass** für jedes Profil (15) des Umfangsteils (14) des Tragrahmens (13) die Blechkante (23) des inneren Seitenzweigs (21) eine Auflagefläche des Außenblechs (12) formt und die Blechkante (24) des äußeren Seitenzweigs (22) eine Fläche für die mechanische Verbindung (26) mit dem Rand (12a) des Tragrahmens (12) formt.

6. Kraftfahrzeugdach nach einem der Ansprüche 1 bis 5, **dadurch gekennzeichnet, dass** die mechanische Verbindung (26) eine Verbindung durch Schweißung und/oder durch Vernietung und/oder durch Verformung ist.

7. Kraftfahrzeugdach nach einem der Ansprüche 1 bis 5, **dadurch gekennzeichnet, dass** die mechanische Verbindung (26) durch Umbiegen des Umfangsrands (12a) des Außenblechs (12) auf der Blechkante (24) des äußeren Seitenzweigs (22) des Profils (15) hergestellt wird.

8. Kraftfahrzeugdach nach Anspruch 4 oder 5, **dadurch gekennzeichnet, dass** der innere Seitenzweig (21) eine Einkerbung (21a) zur Positionierung der Klebstoffschnur (25) aufweist und der äußere Seitenzweig (22) eine Einkerbung (22a) zur Positionierung einer Dichtungsschnur (27) aufweist.

9. Kraftfahrzeugdach nach Anspruch 3, **dadurch gekennzeichnet, dass** die Zwischenprofile (16) alle einen "U"-förmigen Querschnitt mit einem Boden (40) und einem Seitenzweig (41, 42) aufweisen, die jeder durch eine Blechkante (43, 44) verlängert werden, die im Wesentlichen rechtwinklig zum entsprechenden Seitenzweig zum Äußeren des Profils (16) hin verlaufen und eine Auflagefläche des Außenblechs (12) formen.

10. Kraftfahrzeugdach nach Anspruch 9, **dadurch gekennzeichnet, dass** jeder Seitenzweig (41, 42) eine Einkerbung (41a, 42a) zur Positionierung einer Klebstoffschnur (25) aufweist.

11. Kraftfahrzeugdach nach einem der Ansprüche 1 bis 10, **dadurch gekennzeichnet, dass** der Tragrahmen (13) Indexierungselemente (28) auf dem Oberbau des Kraftfahrzeugs aufweist.

12. Kraftfahrzeug, **dadurch gekennzeichnet, dass** es ein Dach (10) nach einem der vorherigen Ansprüche aufweist.
